# EUROPÄISCHE PATENTSCHRIFT

(11) **EP 3 369 154 B1**
(45) Veröffentlichungstag und Bekanntmachung des Hinweises auf die Patenterteilung: **04.01.2023**
(21) Anmeldenummer: 16787838.8
(22) Anmeldetag: 26.10.2016
(51) Int. Cl.: H02J 50/10, H02J 7/00, H04B 1/3877, H04M 1/04

(54) **HALTE- UND LADEVORRICHTUNG FÜR EIN MOBILES ENDGERÄT**
HOLDING AND CHARGING DEVICE FOR A MOBILE TERMINAL
DISPOSITIF DE SUPPORT ET DE CHARGE POUR UN TERMINAL MOBILE

(30) Priorität: 29.10.2015 CH 15812015
(43) Veröffentlichungstag der Anmeldung: 05.09.2018
(73) Patentinhaber: Tecflower AG, 8835 Feusisberg (CH)
(72) Erfinder: REINGER, Sascha, 8835 Feusisberg (CH)
(74) Vertreter: Prins Intellectual Property AG
(86) Internationale Anmeldenummer: PCT/EP2016/075775
(87) Internationale Veröffentlichungsnummer: WO 2017/072163

(56) Entgegenhaltungen:
- WO-A2-2011/156768
- US-A1- 2011 050 164
- US-A1- 2015 002 088
- "SYSTEM DESCRIPTION WIRELESS POWER TRANSFER", INTERNET CITATION, 1. Oktober 2010 (2010-10-01), Seiten 1-76, XP008158253, Gefunden im Internet: URL:http://www.y-adagio.com/public/committ ees/iec_tc100_ags/meetings/29/100ags438.pd f [gefunden am 2012-11-21] in der Anmeldung erwähnt

## Beschreibung

### Technisches Gebiet

Die vorliegende Erfindung beschreibt eine Halte- und Ladevorrichtung gemäß Anspruch 1 für ein mobiles Endgerät, insbesondere für Smartphones und Tablet-Computer, umfassend eine Gehäuseschale, in welcher ein Elektronikmodul, umfassend eine Sendespule, mindestens eine Abschirmlage und eine Ladeelektronik, angeordnet ist, wobei eine lösbare Befestigung des mobilen Endgeräts an der Halte- und Ladevorrichtung durch eine Wirkverbindung mit mindestens einem Permanentmagnet der Halte- und Ladevorrichtung und einem ferromagnetischen Halteelement des mobilen Endgeräts erreichbar ist, sowie ein System gemäß Anspruch 6, umfassend eine Halte- und Ladevorrichtung und eine Einlage für ein mobiles Endgerät.

### Stand der Technik

Der Wunsch Mobilgeräte bzw. mobile Endgeräte kabellos durch Induktion aufzuladen besteht schon seit längerem. Dies ist unter dem Sammelbegriff der drahtlosen Energieübertragung im Nahfeld bekannt, wobei die technischen Anwendungen auf Bereiche zwischen einigen Zentimeter bis Meter limitiert sind.

Es sind Ladegeräte kommerziell erhältlich, auf die man ein Mobiltelefon, Smartphones, Personal Digital Assistants, Navigationsgeräte oder Tablet-Computer einfach auflegen kann und schon beginnt der Ladevorgang. Dazu ist eine Ladeelektronik nötig, die mit einer Sendespule in einem Gehäuse verbunden ist. In einer Empfangsspule des Mobiltelefons wird durch den Wechselstrom in der Sendespule eine Wechselspannung induziert. Die Wechselspannung in der Empfangsspule wird gleichgerichtet und dem Laderegler des Mobiltelefons zur Aufladung mittels Empfangselektronik zugeführt. Neben einer induktiven Kopplung der Sende- und Empfangsspule kann auch eine resonant induktive Kopplung durchgeführt werden. Diese Verfahren werden seit geraumer Zeit durchgeführt und es haben sich Standards wie Qi und Powermat etabliert, durch welche sich unterschiedliche Smartphones verschiedener Hersteller mittels Induktion an unterschiedlichen Halte- und Ladegeräten aufladen lassen, unabhängig vom Hersteller des jeweiligen Endgerätes.

Nun sind Halte- und Ladevorrichtungen mit Befestigungsvorrichtungen gefragt, welche beispielsweise ein Mobiltelefon nicht nur auf einem Tisch horizontal aufliegend aufladen können, sondern ein Aufstellen des Mobiltelefons ermöglichen. Entsprechend muss das Mobiltelefon bzw. mobile Endgerät lösbar gehalten werden.

Dazu ist eine Halte- und Ladevorrichtung bekannt, welche eine Halterung des Mobiltelefons mittels einer Mehrzahl von Permanentmagneten bewerkstelligt, wobei die Permanentmagnete von der Sendespule lateral beabstandet ausserhalb der Sendespule in einem Gehäuse angeordnet sind. Das Mobilgerät, z.B. das Mobiltelefon wird dadurch ausreichend gut festgehalten und es ist sogar eine vertikale Stellung des Mobiltelefons erreichbar. Die Zentrierung des mobilen Endgerätes bzw. der Empfangsspule über der Sendespule erfolgt durch mechanische Mittel. Aufgrund der ausladenden Anordnung der Permanentmagnete ausserhalb des Sendespulenbereiches folgt ein ausladender grosser Aufbau des Gehäuses und damit der Halte- und Ladevorrichtung.

In einer weiteren Ausgestaltung einer Halte- und Ladevorrichtung unter Ausnutzung einer magnetischen Haltekraft zur Halterung eines mobilen Endgerätes, wurde im Kern der Sendespule ein Permanentmagnet platziert, welcher für die geforderte Magnetkraft auf das mobile Endgerät sorgt. Durch Vorkehrungen am oder im Mobilgerät in Form von ferromagnetischen Halteelementen ist eine Zentrierung des mobilen Endgerätes über der Sendespule erreichbar, da der Permanentmagnet mit der ferromagnetischen Einlage zusammenwirkt. Beide Spulen, die Sendespule in der Halte- und Ladevorrichtung und die wirkverbindbare Empfangsspule im mobilen Endgerät müssen möglichst exakt übereinander zu liegen kommen, um eine optimale Energieübertragung zu erreichen.

Mit einer solchen Ausgestaltung mit einem zentralen Permanentmagneten war der Aufbau der Halte- und Ladevorrichtung stark verkleinerbar. Wie aber Versuche gezeigt haben, tauchen beim Betrieb thermische Probleme auf. Eine starke Temperaturerhöhung des Permanentmagneten sowie der Ladeelektronik kann gemessen werden. Diese Temperaturerhöhungen können auch mit Abschirmlagen, beispielsweise aus Mu-Metall mit hoher Permeabilität nicht beseitigt werden, da in der Regel nur niederfrequentere Magnetfelder gut abschirmbar sind. Derart hohe Temperaturen schaden auf Dauer der Ladeelektronik und dem Permanentmagneten und müssen vermieden werden. Den zentralen Permanentmagneten könnte man zum Schutz dicker ausführen, sodass der Permanentmagnet aufgrund einer höheren Masse längere Zeit zum Aufheizen braucht. Die Ladeelektronik müsste zusätzlich noch abgeschirmt werden oder aber bei geringerer Leistungszufuhr betrieben werden, was natürlich die Effizienz verschlechtert. Bislang wurde keine Lösung einer magnetischen Halterung mit effizienter induktiven Aufladung gefunden.

Die US2015/002088 A1 beschreibt eine Halte- und Ladevorrichtung für ein mobiles Endgerät, einsetzbar für Smartphones und Tablet-Computer, umfassend eine Gehäuseschale und ein integriertes Elektronikmodul, mit welchem eine drahtlose Wiederaufladung durchführbar ist.

Aus der US 2011/050164 A1 geht eine Halte- und Ladevorrichtung für unterschiedliche mobile Endgeräte hervor, umfassend ein Gehäuse. Ein Permanentmagent mit einer Öffnung ist auf einer Leiterplatte angeordnet.

Eine Spule wird von der Leiterplatte gebildet und der Permanentmagnet und die Spule liegen in parallel beabstandeten Ebenen, wobei der Permanentmagnet die Spule aussen umläuft.

### Darstellung der Erfindung

Die vorliegende Erfindung hat sich zur Aufgabe gestellt eine Halte- und Ladevorrichtung mit permanentmagnetischer Kopplung eines mobilen Endgerätes zu schaffen, wobei ein kompaktes Design erreicht wird, keine störende thermische Belastung auftritt und eine automatische Zentrierung der Empfangsspule zur Sendespule gegeben ist.

Diese Aufgabe erfüllt eine Vorrichtung mit den Merkmalen des Patentanspruches 1. Durch die spezielle Ausgestaltung der Halte- und Ladevorrichtung fühlt sich die Wirkverbindung eines mobilen Endgerätes mit der Halte- und Ladevorrichtung so an, als würde das mobile Endgerät in eine Vertiefung an der Halte- und Ladevorrichtung einrasten. Damit ist die Bedienung benutzerfreundlicher als bei aus dem Stand der Technik bekannten Halte- und Ladevorrichtungen.

### Kurze Beschreibung der Zeichnungen

Weitere Merkmale, Einzelheiten und Vorzüge der Erfindung ergeben sich aus der nachfolgenden Beschreibung bevorzugter Ausführungsformen der Erfindung sowie der Zeichnungen. Es sind dargestellt in
- Figur 1: zeigt ein System aus einer Halte- und Ladevorrichtung mit lösbar magnetisch befestigtem mobilem Endgerät.
- Figur 2: zeigt eine perspektivische Schemaansicht eines mobilen Endgerätes mit einer Einlage, welche mit der Halte- und Ladevorrichtung koppelbar ist.
- Figur 3: zeigt eine schematische Explosionsdarstellung einer Halte- und Ladevorrichtung befestigt an einem Tischständer mit mobilem Endgerät.
- Figur 4a: zeigt eine Ausgestaltung eines Permanentmagneten eingelegt in eine Magnetaussparung, während
- Figur 4b: eine Ausgestaltung zweier ringsegmentförmiger Permanentmagneten eingelegt in jeweils eine Magnetaussparung zeigt, wobei die Permanentmagnete ein mehrfach offenes Ringsegment bilden, während
- Figur 4c: eine Schnittdarstellung entlang Linie A-A aus Figur 4b zeigt.
- Figur 5: zeigt eine Halte- und Ladevorrichtung, welche mittels Bajonettverschluss mit einem Lüftungsgitterhalter lösbar verbindbar ist.
- Figur 6: zeigt eine Ansicht einer Einlage vor dem Einbau in ein mobiles Endgerät, während
- Figur 7: eine perspektivische Ansicht einer Mobiltelefonhülle zeigt, in welche eine Einlage integriert ist.

### Beschreibung

Im Folgenden wird eine Halte- und Ladevorrichtung 1 für ein mobiles Endgerät 2 oder Mobilgerät 2, insbesondere für ein Mobiltelefon, Smartphone, Personal Digital Assistant, Navigationsgerät oder einen Tablet-Computer beschrieben. Mittels Magnetkraft ist das mobile Endgerät 2 lösbar an der Halte- und Ladevorrichtung 1 befestigbar, wodurch ein System aus Mobilgerät 2 und Halte- und Ladevorrichtung 1 gebildet wird.

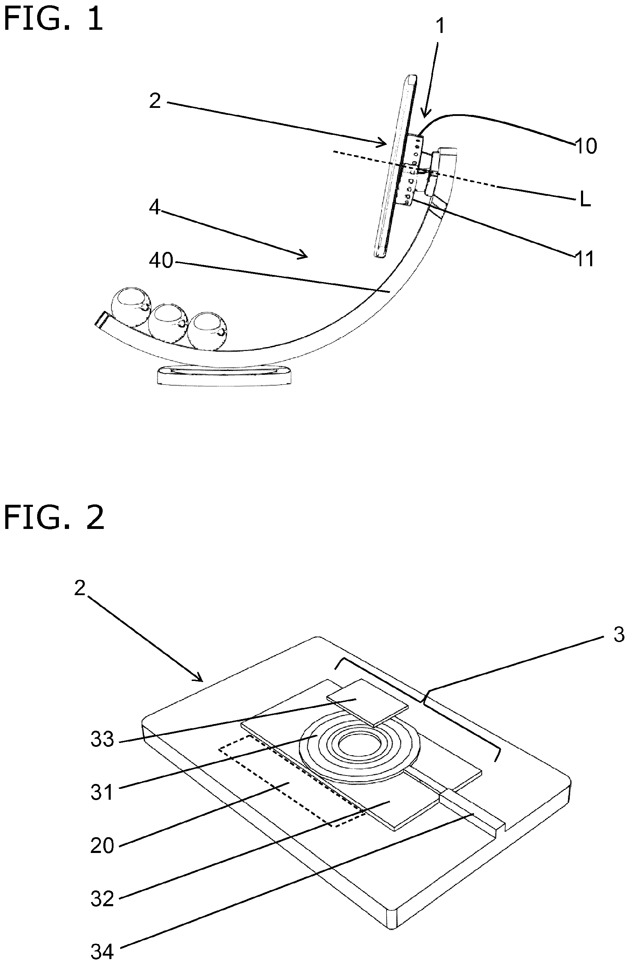

In Figur 1 ist eine Halte- und Ladevorrichtung 1 gezeigt, die an einer Befestigungsvorrichtung 4 in Form eines Tischständers 40 ausgestaltet, befestigt ist. Der Einfachheit halber sind keine Verkabelungen zur Stromversorgung der Halte- und Ladevorrichtung 1 dargestellt. Die Halte- und Ladevorrichtung 1 weist eine Gehäuseschale 10 auf, die mit einer Gehäuserückwand 11 verschlossen ist. Die Halte- und Ladevorrichtung 1 erstreckt sich dabei in Richtung einer Längsachse L. Das mobile Endgerät 2 ist an der, der Gehäuserückwand 11 gegenüberliegenden Seite der Gehäuseschale 10 lösbar an der Halte- und Ladevorrichtung 1 ankoppelbar. Zur Ankopplung wird das mobile Endgerät 2 an die Halte- und Ladevorrichtung 1 in Richtung der Längsachse L angenähert und eine Wirkverbindung zwischen mindestens einem Permanentmagneten der Halte- und Ladevorrichtung 1 und mindestens einem ferromagnetischen Halteelement in bzw. am mobilen Endgerät 2 wird ausgebildet.

Das mobile Endgerät 2 weist einen eingebauten Akku 20 auf und wird mit einer Einlage 3 bestückt. Die Einlage 3 umfasst eine Empfangsspule 31, eine Empfangselektronik 32 und ein ferromagnetisches Halteelement 33. Die Einlage 3 kann in den Innenraum des mobilen Endgerätes 2 eingelegt werden oder einen Teil der Rückwand des mobilen Endgerätes 2 bilden. Nachdem die Einlage 3 durch elektrische Verbindung 34 der Empfangselektronik 32 mit dem mobilen Endgerät 2 verbunden ist, kann eine spätere Aufladung des Akkus 20 mittels der Einlage 3 und der Halte- und Ladevorrichtung 1 durchgeführt werden. In Figur 2 ist die Einlage 3 in den Innenraum des mobilen Endgerätes 2 eingelegt, wobei die Rückwand des mobilen Endgerätes 2 nicht gezeigt ist. Damit ein mobiles Endgerät 2 mit der Halte- und Ladevorrichtung 1 koppelbar und aufladbar ist, muss das mobile Endgerät 2 die Empfangsspule 31, die Empfangselektronik 32, mindestens ein ferromagnetisches Halteelement 33 und eine elektrische Verbindung 34 aufweisen. Diese Bauteile können als Einlage 3 nachgerüstet werden oder bereits Bestandteile des mobilen Endgerätes 2 sein.

Die Halte- und Ladevorrichtung 1 umfasst ein Elektronikmodul 13, welches in dem Innenraum der Gehäuseschale 10, abgeschlossen von der Gehäuserückwand 11 gelagert ist. Das Elektronikmodul 13 weist eine Sendespule 130, insbesondere als Flachspule ausgestaltet, eine Abschirmlage 131, insbesondere aus Mü-Metall, eine Ladeelektronik 132 und elektrische Verbindungen 1300 zwischen der Sendespule 130 und der Ladeelektronik 132 auf. Die Bauteile des Elektronikmoduls 13 sind in Richtung Längsachse L gestapelt angeordnet. Eine Verkabelung zur Spannungsversorgung ist hier nicht dargestellt. Die Abschirmlage 131 verhindert störendes Einwirken elektromagnetischer Felder auf die Ladeelektronik 132.

Die Gehäuseschale 10 weist Befestigungsmittelaussparungen 102 auf. Die Gehäuserückwand 11 weist ebenfalls Befestigungsmittelaussparungen 111 auf, sodass mittels Befestigungsmitteln 14 die Gehäuseschale 10 durch die Gehäuserückwand 11 verschliessbar ist. Hier sind Schrauben als Befestigungsmittel 14 vorgesehen, die das Verschliessen der Gehäuseschale 10 ermöglichen, nachdem das Elektronikmodul 13 in den Innenraum der Gehäuseschale 10 eingebracht wurde. Über die Gehäuserückwand 11 ist die Halte- und Ladevorrichtung 1 an der Befestigungsvorrichtung 4 hier in Form eines Tischständers 40 befestigt.

In der Wand der Gehäuseschale 10, auf der vom Innenraum und dem Elektronikmodul 13 abgewandten Seite, ist mindestens eine Magnetaussparung 100 eingeformt. Diese Magnetaussparung 100 weist in Längsrichtung L weg vom Elektronikmodul 13 in Richtung zu befestigenden mobilen Endgerät 2. In die mindestens eine Magnetaussparung 100 ist mindestens ein Permanentmagnet 101 eingelegt und darin fixiert. Neben einer klemmenden Verbindung, kann auch eine Klebung des Permanentmagneten 101 erfolgen. Die Verwendung mindestens einer Magnetaussparung 100 ermöglicht das Versenken des mindestens einen Permanentmagneten 101. Möglich, aber nicht im Rahmen der beanspruchten Erfindung, wäre auch das Anbringen des Permanentmagneten 101 auf die ebene, vom Innenraum abgewandte Wand der Gehäuseschale 10. Um den Permanentmagneten 101 im Betrieb zu schützen, ist hier eine Schutzlage 12, den mindestens einen Permanentmagneten 101 abdeckend angeordnet. Die Schutzlage 12 ist in Richtung Längsachse L parallel zum mindestens einen Permanentmagneten 101 verschoben ausgerichtet. Das mobile Endgerät 2 kommt so im wirkverbundenen Zustand nur mit der Schutzlage 12 in Kontakt.

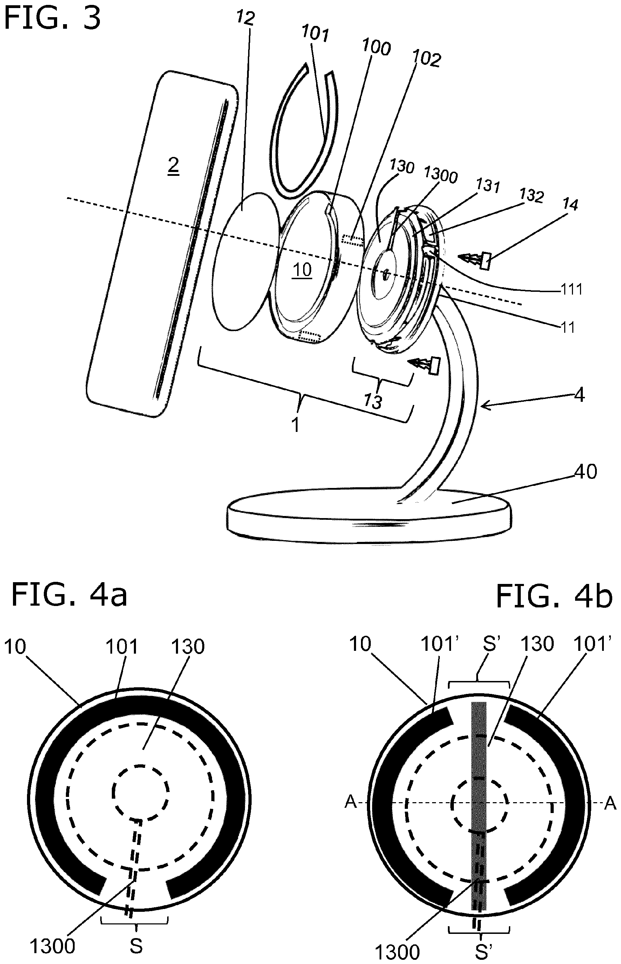

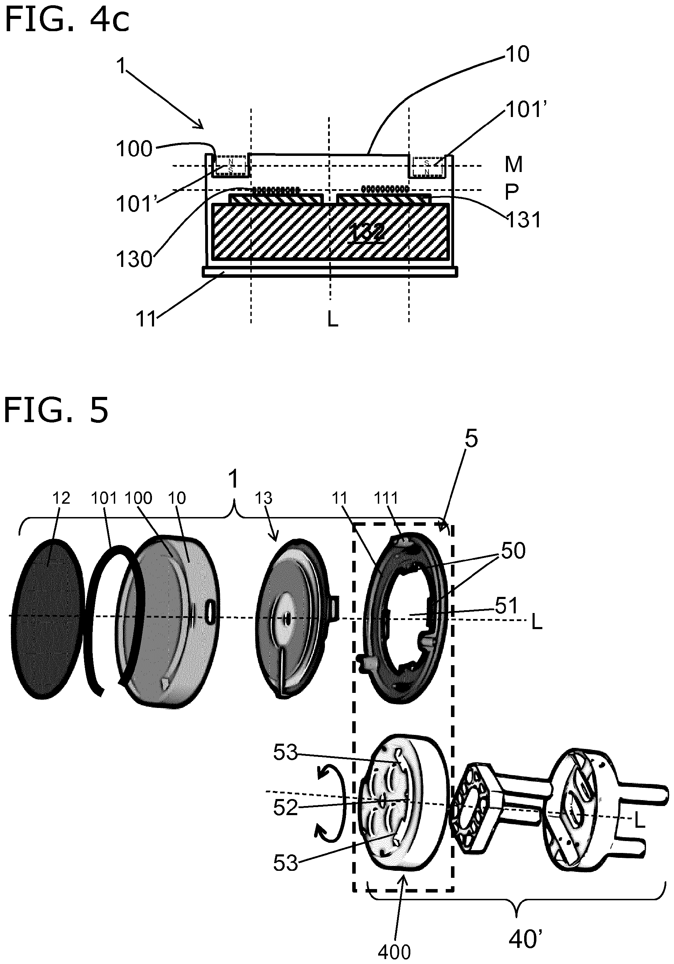

Der mindestens eine Permanentmagnet 101 bildet ein in der Ebene des mindestens einen Permanentmagneten 101 offenes Ringsegment, welches mindestens einen Spalt S aufweist, wodurch Induktionsströme im Permanentmagneten 101 unterbunden werden. Mögliche Gestaltungen des mindestens einen Permanentmagneten 101 sind in den Figuren 4 dargestellt.

In einer Ausführungsform kann ein ebener Permanentmagnet 101 gewählt sein, der ein offenes ebenes Ringsegment mit einem Spalt S bildet. Hier ist die magnetische Polarisierung so gewählt, dass der magnetische Nordpol auf der von der Gehäuseschale 10 wegweisenden Seite angeordnet ist. Da der Permanentmagnet 101 in eine entsprechend geformte Magnetaussparung 100 eingelegt ist, ist eine einfache Befestigung möglich. Wie in Figur 4a angedeutet, liegt die Sendespule 130, die als Flachspule ausgestaltet ist, im Innendurchmesser des ringförmigen Permanentmagneten 101. Der Innendurchmesser des ringförmigen Permanentmagneten 101 ist entsprechend grösser als der Aussendurchmesser der Sendespule 130. Am Ort des Spaltes S sind elektrische Verbindungen 1300 einfach am Permanentmagneten 101 vorbei geführt.

In einer weiteren Ausführungsform sind zwei ebene ringsegmentartige Permanentmagneten 101', ein zwei Spalte S' aufweisendes Ringsegment bildend ausgestaltet. Durch einen Spalt S' sind elektrische Verbindungen 1300 einfach durchführbar. Die beiden Permanentmagnete 101' bilden ein an zwei Stellen geöffnetes Ringsegment, welches die Sendespule 130 beabstandet umgibt.

In der Schnittansicht gemäss Figur 4c ist verdeutlicht, dass die Permanentmagnete 101' in einer Magnetebene M liegen und die Sendespule 130 in einer parallel in Richtung Längsachse L beabstandeten Spulenebene P liegt. Die magnetische Polarisierung der beiden Permanentmagnete 101' ist entgegengesetzt gewählt. Die Permanentmagnete 101' sind ebenfalls in Magnetaussparungen 100 angeordnet. Die Sendespule 130 ist derart relativ zu den Permanentmagneten 101' ausgerichtet, dass sich die Körper der Permanentmagnete 101' und die Windungen der Sendespule 130 in Richtung senkrecht zur Längsachse L nicht bis nur geringfügig überlappen. Durch die senkrechten gestrichelten Linien ist die fehlende Überlappung gekennzeichnet.

Versuche haben gezeigt, das auch mehr als zwei Permanentmagnete 101' zur Bildung eines offenen Ringsegmentes wählbar sind. In einer Ausführungsform wurden mehr als sechs einzelnen eben ausgeführte und jeweils einen kreisförmigen Querschnitt aufweisende Permanentmagnete 101' genutzt. Dabei wurden die Permanentmagnete 101' in der Magnetebene M mit jeweils einem gleichbleibenden Abstand zwischen benachbarten Permanentmagneten 101' angeordnet, wobei die magnetische Polarisation benachbarter Permanentmagnete 101' in Längsrichtung L jeweils entgegengesetzt gewählt wurde. An einer Stelle des offenen Ringsegmentes, umfassend kreisförmige Ringteilsegmente wurde der Spalt S zwischen zwei direkt benachbarten Permanentmagneten 101' ausgebildet. Dieser Spalt S war grösser als der Abstand zwischen benachbarten Permanentmagneten 101' gewählt.

Die Magnetebene M ist in allen Ausführungsformen in Längsrichtung L parallel beabstandet zur Spulenebene P verlaufen. Durch den durch mindestens einen Spalt S geöffneten ringsegmentförmigen Permanentmagnet 101 kann eine Überhitzung des oder der Permanentmagneten 101, 101' aufgrund induzierter Ströme im Betrieb verhindert werden.

Um die Halte- und Ladevorrichtung 1 möglichst unkompliziert an eine Mehrzahl unterschiedlicher Befestigungsvorrichtungen 4 befestigen zu können, wurde ein Bajonettverschluss 5 zur Befestigung der Halte- und Ladevorrichtung 1 ausgestaltet.

Die Gehäuserückwand 11 ist dazu mit einer Öffnung 51 versehen worden, welche konzentrisch um die Längsachse L ausgestaltet ist. Am Rand der Öffnung 51 ist eine Mehrzahl von Nasen 50 angeordnet, welche hier in Richtung Längsachse L ragend ausgeführt sind. Die restlichen Bauteile der Halte- und Ladevorrichtung 1 entsprechend denen, wie in Figur 3 gezeigt. Da die Halte- und Ladevorrichtung 1 hier beispielhaft an einem Lüftungsgitterhalter 40' lösbar befestigt wird, ist eine mögliche dreiteilige Ausführungsform des Lüftungsgitterhalters 40' hier gezeigt. Der Lüftungsgitterhalter 40' weist hier einen Verbindungsteil 400 auf, an welchem die Gehäuserückwand 11 lösbar mittels Bajonettverschluss 5 befestigbar ist.

Der Verbindungsteil 400 umfasst einen konzentrischen Vorsprung mit einer Ringnut 52, in welche abgestimmt auf die Nasen 50 Aussparungen 53 eingeformt sind. Durch ein lineares Einführen des Vorsprunges des Verbindungsteils 400 in die konzentrische Öffnung 51 der Gehäuserückwand 11 in Richtung der Längsachse L und eine anschliessende Rotationsbewegung, wie mit dem Doppelpfeil angedeutet um die Längsachse L, wird die lösbare Befestigung beider Teile erreicht.

Optional kann auch die Gehäuserückwand 11 den Vorsprung, die Ringnut 52 und die Aussparungen 53 aufweisen, während der Verbindungsteil 400 die konzentrische Öffnung 51 und die Nasen 50 aufweist. Auch dann wäre der Bajonettverschluss 5 erreichbar.

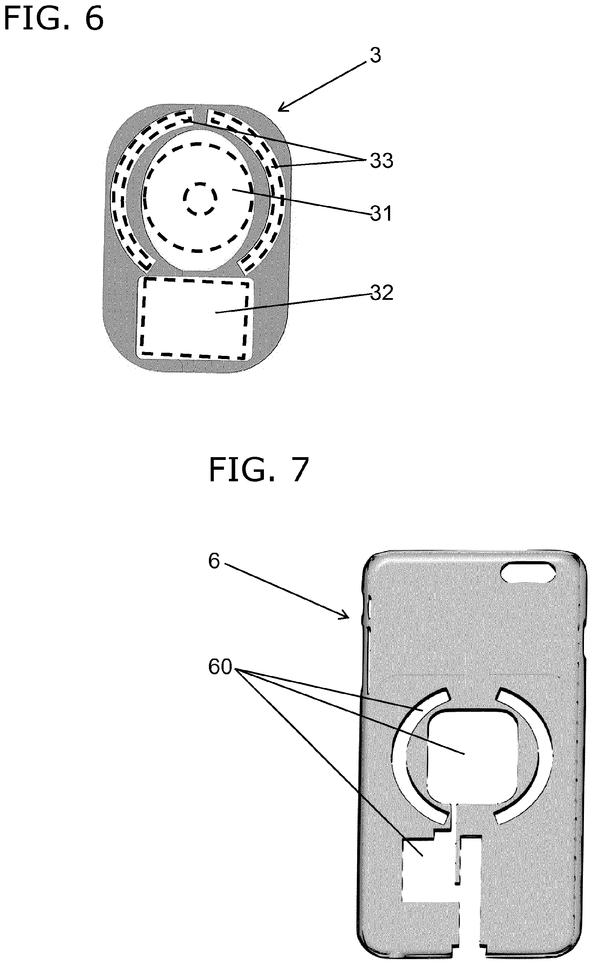

Damit die zur wirksamen Kopplung der Halte- und Ladevorrichtung 1 mit einem mobilen Endgerät 2 notwendigen Bauteile im mobilen Endgerät 2 angeordnet werden können, kann eine Einlage 3, wie in Figur 6 gezeigt verwendet werden. Hier sind zwei Aussparungen für zwei ferromagnetische Halteelemente 33 vorgesehen und jeweils eine Aussparung für die Empfangsspule 31 und eine Aussparung für die Empfangselektronik vorgesehen. Die Einlage 3 wird möglichst flach aus einem Kunststoff ausgestaltet, sodass diese in den Innenraum des mobilen Endgerätes 2 einlegbar ist und die Rückwand des mobilen Endgerätes 2 geschlossen werden kann.

Wahlweise können die notwendigen Bauteile auch in eine speziell geformte Mobiltelefonhülle 6 eingebracht werden, wie in Figur 7 gezeigt. Die Mobiltelefonhülle 6 weist entsprechende Aussparungen 60 auf und fungiert damit als Einlage.

Die Sendespule 130 ist üblicherweise als Flachspule ausgebildet mit maximal möglicher Windungszahl, sodass eine optimierte induktive bzw. resonant induktive Kopplung der Sendespule 130 mit der Empfangsspule 31 im Mobilgerät 2 resultiert. Beide Spulen 130, 31 weisen üblicherweise eine zentrische Aussparung auf, in welchem ein windungsfreier Raum verbleibt. Auch wenn die hier dargestellten Spulen 130, 31 runde Querschnittsflächen aufweisen, funktioniert die vorliegende Erfindung auch, wenn die Spulen 130, 31 mit eher vieleckigen Querschnittsflächen ausgebildet sind.

Die verwendbaren Permanentmagnete 101, 101' sind insbesondere Seltenerdmagnete, umfassend eine Legierung aus Neodym-Eisen-Bor. Damit sind ausreichend hohe Magnetkräfte erreichbar, welche Smartphones und auch Tablet-Computer halten können.

Für die Abschirmlage 131 wird in der Regel Mu-Metall eingesetzt, welches sich durch eine hohe Permeabilität auszeichnet. Damit ist ein Abschirmeffekt erreichbar, der magnetische Störfelder beispielsweise von der Ladeelektronik 132 abhält, wodurch eine Schirmdämpfung erreicht wird. Derartige Lagen aus Mu-Metall sind formstabil aber spröde und müssen vor Biegebeanspruchungen geschützt werden. Da Mu-Metall teuer ist, werden möglichst dünne Lagen verwendet, die noch zusätzlich mit Klebelagen verstärkt werden sollten. In einem Lagenverbund, wie hier vorgestellt innerhalb der Gehäuseschale 10 kann das Mu-Metall seine Wirkung gesichert entfalten.

Mit der hier vorgestellten Halte- und Ladevorrichtung 1 konnten Akkus 20 mobiler Endgeräte 2 bei voller elektrischer Leistung der Ladeelektronik 132 aufgeladen werden, wobei die mit einer Wärmebildkamera an unterschiedlichen Orten gemessenen Temperaturspitzen im Bereich bis zu maximal 50°C bestimmt wurden. Diese geringe thermische Belastung hat keine schädlichen Einflüsse auf die Ladeelektronik 132 oder andere Bauteile der Halte- und Ladevorrichtung 1 und garantiert einen langen Betrieb der Halte- und Ladevorrichtung 1.

Eine automatische Zentrierung des mobilen Endgerätes 2 an der Halte- und Ladevorrichtung 1 bzw. der Sendespule 130 über der Empfangsspule 31 wird durch die Magnetkraft des mindestens einen Permanentmagnets 101. 101' auf das ferromagnetische Halteelement 33 erreicht. Das mobile Endgerät 2 richtet sich so an der Halte- und Ladevorrichtung 1 aus, dass der Benutzer den Eindruck hat, das mobile Endgerät 2 würde in eine Vertiefung an der Halte- und Ladevorrichtung 1 einrasten.

### Bezugszeichenliste

1 Halte- und Ladevorrichtung
   10 Gehäuseschale
      100 Magnetaussparung
      101 Permanentmagnet (offenes Ringsegment)
      S Spalt
      M Magnetebene
      102 Befestigungsmittelaussparung
   11 Gehäuserückwand
      111 Befestigungsmittelaussparung
   12 Schutzlage (Gummi)
   13 Elektronikmodul
      130 Sendespule (Flachspule)
         P Spulenebene
         1300 elektrische Verbindung
      131 Abschirmlage (Mü-Metall)
      132 Ladeelektronik
   14 Befestigungsmittel
   L Längsachse
2 Mobiles Endgerät
   20 Akku
3 Einlage
   31 Empfangsspule
   32 Empfangselektronik
   33 ferromagnetisches Halteelement
   34 elektrische Verbindung
4,4' Befestigungsvorrichtung
   40 Tischständer
   40' Lüftungsgitterhalter
   400 Verbindungsteil
5 Bajonettverschluss
   50 Mehrzahl von Nasen
   51 Öffnung
   52 Ringnut
   53 Aussparung
6 Mobiltelefonhülle
   60 Aussparung

## Patentansprüche

1. Halte- und Ladevorrichtung (1) für ein mobiles Endgerät (2), insbesondere für Smartphones und Tablet-Computer,
die Halte- und Ladevorrichtung (1) umfassend mindestens einen Permanentmagneten (101) und eine Gehäuseschale (10),
in welcher ein Elektronikmodul (13), umfassend eine Sendespule (130), mindestens eine Abschirmlage (131) und eine Ladeelektronik (132),
angeordnet ist,
wobei die Sendespule (130) des Elektronikmoduls (13) in einer Spulenebene (P) verläuft,
wobei der mindestens eine Permanentmagnet (101') innerhalb einer Magnetebene (M) parallel zur Sendespule (130) liegend angeordnet ist,
wobei die Magnetebene (M) parallel zur Spulenebene (P) beabstandet verläuft, wobei eine lösbare Befestigung des mobilen Endgeräts (2) an der Halte- und Ladevorrichtung (1) durch eine Wirkverbindung mit dem mindestens einen Permanentmagneten (101) der Halte- und Ladevorrichtung (1) und einem ferromagnetischen Halteelement (33) des mobilen Endgeräts (2) erreichbar ist, wobei der mindestens eine Permanentmagnet (101) ein in der Ebene offenes Ringsegment mit einem Spalt (S) zur Unterbindung von Induktionsströmen im Ringsegment bildet,
**dadurch gekennzeichnet, dass**
der mindestens eine Permanentmagnet (101') in mindestens eine Magnetaussparung (100) in einer Wand der Gehäuseschale (10) innerhalb der Magnetebene (M) geklebt oder geklemmt ist, wobei die Gehäuseschale (10) mit einer Gehäuserückwand (11) verschlossen ist, wobei die Wand der Gehäuseschale (10) mit der Magnetaussparung (100) und dem mindestens einen Permanentmagneten (101') auf der vom Innenraum der Gehäuseschale (10) und dem Elektronikmodul (13) abgewandten und der Gehäuserückwand (11) gegenüberliegenden Seite angeordnet ist,
wobei der mindestens eine Permanentmagnet (101') ausserhalb des Innenraumes der Gehäuseschale (10) angeordnet ist.

2. Halte- und Ladevorrichtung (1) nach Anspruch 1, wobei zwei oder mehr Permanentmagnete (101') als einzelne Ringteilsegmente ausgestaltet gewählt sind, welche das offene Ringsegment mit zwei Spalten (S) und mehr aus einzelnen Ringteilsegmenten bilden, wobei benachbarte Permanentmagnete (101') in Längsrichtung (L) der Gehäuseschale (10) jeweils entgegengesetzt magnetisch polarisiert sind.

3. Halte- und Ladevorrichtung (1) nach einem der Ansprüche 1 bis 2, wobei mehrere Permanentmagnete (101'), insbesondere mehr als sechs Permanentmagnete (101'), mit kreisförmigem Querschnitt ausgestaltet gewählt sind und das offene Ringsegment bilden, indem benachbarte Permanentmagnete (101') in der Ebene voneinander beabstandet sind und in Längsrichtung (L) der Gehäuseschale (10) entgegengesetzt magnetisch polarisiert sind und mindestens ein Spalt (S) zwischen zwei benachbarten Permanentmagneten (101') ausgebildet ist.

4. Halte- und Ladevorrichtung (1) nach einem der vorhergehenden Ansprüche, wobei die Gehäuserückwand (11) einen Teil eines Bajonettverschlusses (5) bildet, während ein wirkverbindbarer Verbindungsteil (400) als zweiter Bajonettverschlussteil an einer Befestigungsvorrichtung (4, 4') angeformt oder befestigt ist, sodass die Halte- und Ladevorrichtung (1) einfach lösbar an der Befestigungsvorrichtung (4, 4') befestigbar ist.

5. Halte- und Ladevorrichtung (1) nach Anspruch 4, wobei an der Gehäuserückwand (11) eine konzentrische Öffnung (51) mit einer Mehrzahl von Nasen (50) angeordnet ist, in welche ein konzentrischer Vorsprung am Verbindungsteil (400) eine Ringnut (52), mit auf die Mehrzahl von Nasen (50) abgestimmten Aussparungen (53) einführbar und befestigbar ist.

6. System, umfassend eine Halte- und Ladevorrichtung (1) nach einem der vorhergehenden Ansprüche und eine Einlage (3) für ein mobiles Endgerät (2),
**dadurch gekennzeichnet, dass**
die Einlage (3) eine Empfangsspule (31), eine Empfangselektronik (32) und mindestens ein ferromagnetisches Halteelemente (33) umfasst, mit welchem der mindestens eine Permanentmagnet (101') der Halte- und Ladevorrichtung (1) wirkverbindbar ist, wodurch eine lösbare Befestigung zwischen Einlage (3) bzw. mobilem Endgerät (2) und der Halte- und Ladevorrichtung (1) ausbildbar ist.

7. System nach Anspruch 6, wobei die Einlage (3) als separates Bauteil in das mobile Endgerät (2) einlegbar gestaltet ist.

8. System nach Anspruch 6, wobei die Einlage (3) als Teil einer Mobiltelefonhülle (6) ausgestaltet ist.

## Claims

1. A holding and charging device (1) for a mobile terminal (2), particularly for smartphones and tablet computers, the holding and charging device (1) comprising at least one permanent magnet (101) and a housing shell (10), in which an electronic module (13) comprising a transmitting coil (130), at least one shielding layer (131) and charging electronics (132) is arranged, the transmitting coil (130) of the electronic module (13) running in a coil plane (P), the at least one permanent magnet (101') being arranged to lie inside a magnetic plane (M) parallel to the transmitting coil (130), the magnetic plane (M) running parallel to the coil plane (P) in a spaced manner, a detachable fastening of the mobile terminal (2) to the holding and charging device (1) being achievable by an operative connection to the at least one permanent magnet (101) of the holding and charging device (1) and a ferromagnetic holding element (33) of the mobile terminal (2), the at least one permanent magnet (101) forming a ring segment, which is open in the plane, with a gap (S) to suppress induction currents in the ring segment,
**characterized in that**
the at least one permanent magnet (101') is adhesively bonded or clamped into at least one magnetic recess (100) in a wall of the housing shell (10) inside the magnetic plane (M), wherein the housing shell (10) is closed with a housing back panel (11), wherein the wall of the housing shell (10) with the magnetic recess (100) and the at least one permanent magnet (101') is arranged on the side facing away from the interior of the housing shell (10) and the electronic module (13) and opposite the housing back panel (11), wherein the at least one permanent magnet (101') is arranged outside the interior of the housing shell (10).

2. The holding and charging device (1) according to Claim 1, wherein two or more permanent magnets (101') are chosen to be configured as individual partial ring segments, which form the open ring segment with two gaps (S) and more individual partial ring segments, wherein adjacent permanent magnets (101') are respectively oppositely magnetically polarized in the longitudinal direction (L) of the housing shell (10).

3. The holding and charging device (1) according to one of Claims 1 to 2, wherein a plurality of permanent magnets (101'), particularly more than six permanent magnets (101') are chosen to be configured with a circular cross section and form the open ring segment, in that adjacent permanent magnets (101') are spaced from one another in the plane and are oppositely magnetically polarized in the longitudinal direction (L) of the housing shell (10), and at least one gap (S) is formed between two adjacent permanent magnets (101').

4. The holding and charging device (1) according to one of the preceding claims, wherein the housing back panel (11) forms a part of a bayonet closure (5), whilst an operatively connectable connecting part (400) is moulded or fastened on a fastening device (4, 4') as second bayonet closure part, so that the holding and charging device (1) can easily be fastened to the fastening device (4, 4') in a detachable manner.

5. The holding and charging device (1) according to Claim 4, wherein a concentric opening (51) with a plurality of lugs (50) is arranged on the housing back panel (11), into which a concentric projection on the connecting part (400), an annular groove (52), with recesses (53) matched to the plurality of lugs (50) can be introduced and fastened.

6. A system comprising a holding and charging device (1) according to one of the preceding claims and an insert (3) for a mobile terminal (2),
**characterized in that**
the insert (3) comprises a receiving coil (31), receiving electronics (32) and at least one ferromagnetic holding element (33), to which the at least one permanent magnet (101') of the holding and charging device (1) can be operatively connected, as a result of which a detachable fastening can be formed between insert (3) or mobile terminal (2) and the holding and charging device (1).

7. The system according to Claim 6, wherein the insert (3) is configured to be insertable into the mobile terminal (2) as a separate component.

8. The system according to Claim 6, wherein the insert (3) is configured as part of a mobile telephone case (6).

## Revendications

1. Dispositif de maintien et de charge (1) pour un terminal mobile (2), en particulier pour téléphones mobiles multifonction et tablettes informatiques, le Dispositif de maintien et de charge (1) comprenant au moins un aimant permanent (101) et une coque de boîtier (10), dans laquelle est disposé un module électronique (13), comprenant une bobine émettrice (130), au moins une couche de protection (131) et un système électronique de charge (132), sachant que la bobine émettrice (130) du module électronique (13) passe dans un plan de bobine (P), sachant qu'au moins un aimant permanent (101') est disposé à plat à l'intérieur d'un plan d'aimant (M) parallèlement à la bobine émettrice (130), sachant que le plan d'aimant (M) passe à distance parallèlement au plan de bobine (P), sachant qu'une fixation mobile du terminal mobile (2) sur le Dispositif de maintien et de charge (1) peut être accessible par une liaison fonctionnelle avec au moins un aimant permanent (101) du Dispositif de maintien et de charge (1) et un élément de maintien ferromagnétique (33) du terminal mobile (2), sachant qu'au moins un aimant permanent (101) forme un segment annulaire ouvert dans un plan avec un interstice (S) pour empêcher des courants d'induction dans le segment annulaire,
**caractérisé en ce qu'**
au moins un aimant permanent (101') est collé ou serré dans au moins un logement d'aimant (100) dans une paroi de la coque de boîtier (10) à l'intérieur du plan d'aimant (M), sachant que la coque de boîtier (10) est fermée avec une paroi arrière de boîtier (11), sachant que la paroi de la coque de boîtier (10) est disposée avec le logement d'aimant (100) et au moins un aimant permanent (101') sur le côté éloigné de l'espace intérieur de la coque de boîtier (10) et au module électronique (13) et opposé à la paroi arrière de boîtier (11), sachant qu'au moins un aimant permanent (101') est disposé en dehors de l'espace intérieur de la coque de boîtier (10).

2. Dispositif de maintien et de charge (1) selon la revendication 1, sachant que deux ou plusieurs aimants permanents (101') sont choisis constitués comme segments individuels de partie annulaire, lesquels forment le segment annulaire ouvert avec deux interstices (S) et plus de segments individuels de partie annulaire, sachant que les aimants permanents (101') voisins sont respectivement polarisés magnétiquement dans le sens opposé dans la direction longitudinale (L) de la coque de boîtier (10).

3. Dispositif de maintien et de charge (1) selon l'une quelconque des revendications 1 à 2, sachant que plusieurs aimants permanents (101'), en particulier plus de six aimants permanents (101'), sont choisis constitués avec une section circulaire et forment le segment annulaire ouvert, dans lequel les aimants permanents (101') voisins sont à distance l'un de l'autre dans le plan et sont polarisés magnétiquement dans le sens opposé dans la direction longitudinale (L) de la coque de boîtier (10) et au moins un interstice (S) est constitué entre deux aimants permanents (101') voisins.

4. Dispositif de maintien et de charge (1) selon l'une quelconque des revendications précédentes, sachant que la paroi arrière de boîtier (11) forme une partie d'une fermeture à baïonnette (5), alors qu'une pièce de liaison (400) de liaison fonctionnelle est conformée ou fixée en tant que deuxième partie de fermeture à baïonnette sur un dispositif de fixation (4, 4') de telle sorte que le Dispositif de maintien et de charge (1) peut être fixé facilement séparable sur le dispositif de fixation (4, 4').

5. Dispositif de maintien et de charge (1) selon la revendication 4, sachant qu'une ouverture concentrique (51) avec une pluralité d'ergots (50) est disposée sur la paroi arrière de boîtier (11), dans laquelle une saillie concentrique sur la partie de liaison (400) peut être introduites et fixées dans une rainure annulaire (52) avec des logements (53) adaptés à la pluralité de ergots (50).

6. Système, comprenant un dispositif de maintien et de charge (1) selon l'une quelconque des revendications précédentes et une garniture (3) pour un terminal mobile (2),
**caractérisé en ce que**
la garniture (3) comprend une bobine réceptrice (31), un système électronique de réception (32) et au moins un élément de maintien ferromagnétique (33), avec lequel au moins un aimant permanent (101') du Dispositif de maintien et de charge (1) peut être relié de façon fonctionnelle, une fixation amovible entre la garniture (3) ou le terminal mobile (2) et le dispositif de maintien et de charge (1) pouvant être de ce fait constituée.

7. Système selon la revendication 6, sachant que la garniture (3) est conçue comme composant séparé pouvant être introduit dans le terminal mobile (2).

8. Système selon la revendication 6, sachant que la garniture (3) est constituée comme partie d'une enveloppe de téléphone mobile (6).
